# EUROPÄISCHE PATENTSCHRIFT

(11) **EP 1 892 441 B1**
(45) Veröffentlichungstag und Bekanntmachung des Hinweises auf die Patenterteilung: **29.05.2019**
(21) Anmeldenummer: 07015424.0
(22) Anmeldetag: 07.08.2007
(51) Int. Cl.: F16J 15/08, F02F 11/00

(54) **Zylinderkopfdichtung**
Cylinder head seal
Joint de tête de cylindre

(30) Priorität: 26.08.2006 DE 102006040121; 25.11.2006 DE 102006055741
(43) Veröffentlichungstag der Anmeldung: 27.02.2008
(73) Patentinhaber: ElringKlinger AG, 72581 Dettingen (DE)
(72) Erfinder: Schumacher, Thomas, 72585 Riederich (DE); Hinderer, Harry, 72574 Bad Urach (DE); Diez, Armin, 73252 Lenningen (DE); Bendl, Klaus, 75038 Oberderdingen (DE)
(74) Vertreter: Hoeger, Stellrecht & Partner Patentanwälte mbB

(56) Entgegenhaltungen:
- DE-A1- 3 741 344
- DE-A1- 10 021 975
- DE-U1- 29 812 037
- US-A- 5 332 237
- US-A- 5 755 447

## Beschreibung

Die Erfindung betrifft eine Zylinderkopfdichtung für einen Mehrzylindermotor, insbesondere für einen Nutzfahrzeug-Dieselmotor, welche eine einlagige Dichtungsplatte mit einer einzigen Metallblechlage, Brennraum-Öffnungen sowie für jede Brennraum-Öffnung mindestens ein ringförmiges Brennraum-Dichtelement aufweist, das die zugeordnete Brennraum-Öffnung umschließt und die Gestalt eines auf der Metallblechlage angeordneten und mit dieser durch Schweißen stoffschlüssig verbundenen Metallblechrings hat.

Wenn bei einer solchen Zylinderkopfdichtung für die Abdichtung um eine Brennraum-Öffnung herum außerhalb des Metallblechrings eine höhenelastische Sicke in der Metallblechlage vorgesehen ist, hat der erwähnte Blechring auch die Funktion eines sogenannten Stoppers, welcher eine übermäßige Abflachung der Abdichtsicke beim Einbau der Zylinderkopfdichtung und im Motorbetrieb verhindert; die vorliegende Erfindung betrifft jedoch solche Zylinderkopfdichtungen, bei denen um eine Brennraum-Öffnung herum nur mit einem Blechring abgedichtet wird, so dass dieser das einzige Brennraum-Dichtelement bildet.

Bei bekannten Zylinderkopfdichtungen der eingangs erwähnten Art sind als ebene Ringe gestaltete Blechringe auf derjenigen Seite der Metallblechlage (üblicherweise und im Folgenden Trägerblech genannt) angeordnet, welche bei eingebauter Dichtung dem Zylinderkopf zugekehrt ist. Die Blechringe sind mit dem Trägerblech, welches unter den Blechringen eben ist, durch Schweißen, nämlich durch Punktschweißen oder mittels kontinuierlicher Schweißnähte, verbunden.

Infolge der Tendenz, Hubkolben-Verbrennungsmotoren mit immer höherer Verdichtung zu konstruieren, kommt dem folgenden Problem eine immer größere Bedeutung zu: Infolge der im Motorbetrieb auftretenden wechselnden Gasdrücke wird der Zylinderkopf und seine dem Motorblock zugewandte Dichtfläche im Rhythmus der Zündungen periodisch nach oben, d. h. weg vom Motorblock, ausgewölbt, was zu rhythmischen Schiebebewegungen zwischen der Zylinderkopf-Dichtfläche und der Zylinderkopfdichtung führt - als Schiebebewegungen werden solche Relativbewegungen bezeichnet, welche in der Ebene des sogenannten Dichtspalts zwischen den Dichtflächen von Zylinderkopf und Motorblock ablaufen. Es hat sich nun gezeigt, dass bei den vorstehend beschriebenen bekannten Zylinderkopfdichtungen diese erhöhten Schiebebewegungen zu einer Zerstörung der Schweißverbindungen, vor allem aber der Blechringe selbst führen können - im letztgenannten Fall bleibt ein dem Trägerblech zugewandter Teil eines Blechrings am Trägerblech haften, während zumindest im Bereich von Segmenten des Blechrings obere Teile des Blechrings abgespalten werden, was in der Folge auch zu radialen Brüchen im Blechring führen kann. In jedem Fall ist dann die Abdichtung um die betreffende Brennraum-Öffnung herum nicht mehr gewährleistet.

Im Zusammenhang mit dem vorstehend erörterten Zerstörungsrisiko ist noch auf folgendes hinzuweisen: Zum einen überragt das Material der der Befestigung der Blechringe dienenden Schweißpunkte bzw. Schweißnähte häufig die Blechringe, wenn auch nur geringfügig, und zum anderen bildet das beim Schweißen aufgeschmolzene und dann erstarrte Material harte "Schweißkerne", die, wenn die Zylinderkopfdichtung montiert ist und gepresst wird, hohen Druckkräften ausgesetzt sind und dadurch in Richtung auf das Innere des Trägerblechs gepresst werden. Schon dabei kann es zu einer Vorschädigung der Zylinderkopfdichtung an den Grenzflächen zwischen den Schweißkernen und den Blechringen kommen, und diese Vorschädigung erhöht noch die Gefahr einer Zerstörung der Schweißverbindungen und/oder der Blechringe, wenn die Letzteren bei eingebauter Zylinderkopfdichtung gegen den Zylinderkopf angepresst und im Motorbetrieb den Schiebebewegungen zwischen der Zylinderkopf-Dichtfläche und der Zylinderkopfdichtung ausgesetzt sind.

Die dem Einspannen einer Zylinderkopfdichtung zwischen den Dichtflächen von Motorblock und Zylinderkopf dienenden Pressungskräfte werden durch die Zylinderkopfschrauben punktuell aufgebracht; deshalb, und weil die Motorbauteile Motorblock und Zylinderkopf nicht als absolut starre Bauteile betrachtet werden können, sondern eine örtlich unterschiedliche Bauteilsteifigkeit aufweisen, sind ohne besondere Maßnahmen die auf die eingebaute Zylinderkopfdichtung einwirkenden Pressungskräfte nicht überall dieselben.

Aus der DE-A-37 41 344 ergibt sich eine Zylinderkopfdichtung für einen Mehrzylindermotor, welche eine einlagige Dichtungsplatte mit einer einzigen, sich über die ganze Dichtungsplatte erstreckenden Metallblechlage, Brennraum-Öffnungen sowie für jede Brennraum-Öffnung auf jeder Seite der Metallblechlage ein ringförmiges Brennraum-Dichtelement aufweist, das die zugeordnete Brennraum-Öffnung umschließt und die Gestalt eines auf der Metallblechlage angeordneten und mit dieser durch Schweißen unmittelbar verbundenen Metallblechrings hat, wobei die Metallblechringe die einzigen Brennraum-Dichtelemente bilden. Bei dieser bekannten Zylinderkopfdichtung sind alle Metallblechringe und die Metallblechlage insgesamt eben.

Auch aus der DE-A-100 21 975 ergibt sich eine Zylinderkopfdichtung für einen Mehrzylindermotor, deren Dichtungsplatte eine einzige, sich über die ganze Dichtungsplatte erstreckende Metallblechlage und für jede Brennraum-Öffnung einen diese umschließenden Metallblechring besitzt, welcher mit der Metallblechlage jedoch über eine gleichfalls ringförmige Kunststoffschicht verbunden ist.

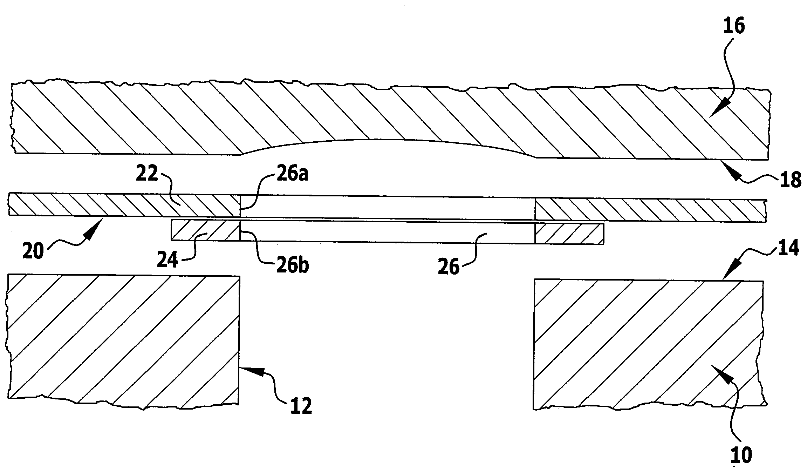

Ausweislich der Fig. 1 wird um jede Brennraum-Öffnung herum mittels einer in der Metallblechlage vorgesehenen Sicke abgedichtet, für welche der Metallblechring einen Verformungsbegrenzer, das heißt einen sogenannten Stopper bildet. Die DE-A-100 21 975 lässt es offen, ob die Metallblechringe bei eingebauter Zylinderkopfdichtung auf der dem Zylinderkopf oder der dem Motorblock zugewandten Seite der Metallblechlage liegen.

Aus der US-A-5,332,237 ergibt sich gleichfalls eine Zylinderkopfdichtung für einen Mehrzylindermotor, welche eine Dichtungsplatte mit einer einzigen, sich über die ganze Dichtungsplatte erstreckenden Metallblechlage aufweist, die um jede Brennraum-Öffnung herum mit einer der Abdichtung der Letzteren dienenden und in die Metallblechlage eingeformten Sicke versehen ist. Jeder dieser Sicken ist ein auf der Metallblechlage befestigter Metallblechring zugeordnet, der die Sicke vor einer übermäßigen Abflachung schützen soll, das heißt einen sogenannten Stopper bildet. Bei der in Fig. 6 dieses Dokuments dargestellten Zylinderkopfdichtung liegen die Metallblechringe auf der bei eingebauter Zylinderkopfdichtung dem Motorblock zugewandten Seite der Metallblechlage, um die Brennraum-Öffnungen herum wird jedoch mit den Sicken abgedichtet, denen die Metallblechringe als Verformungsbegrenzer, das heißt als sogenannte Stopper zugeordnet sind.

Ebenso wie bei der sich aus der US-A-5,332,237 ergebenden Zylinderkopfdichtung weist auch die durch die US-A-5,755,447 offenbarte Zylinderkopfdichtung eine einlagige Dichtungsplatte mit einer einzigen Metallblechlage auf, die für die Abdichtung um jede Brennraum-Öffnung herum mit einer in die Metallblechlage eingeformten Sicke versehen ist. Außerdem ist auf der Metallblechlage zwischen jeder Brennraum-Öffnung und der der Abdichtung dienenden Sicke ein Metallblechring befestigt, welcher die Sicke vor einer übermäßigen Verformung schützen soll, das heißt einen Stopper für die Sicke bildet.

Gegenstand der Erfindung ist eine Zylinderkopfdichtung für einen Mehrzylindermotor, und zwar insbesondere für einen hochverdichteten Nutzfahrzeug-Dieselmotor, welche eine einlagige Dichtungsplatte mit einer einzigen Metallblechlage, Brennraum-Öffnungen sowie für jede Brennraum-Öffnung mindestens ein ringförmiges Brennraum-Dichtelement aufweist, das die zugeordnete Brennraum-Öffnung umschließt und die Gestalt eines auf der Metallblechlage angeordneten und mit dieser durch Schweißen stoffschlüssig verbundenen Metallblechrings hat, wobei die Metallblechringe die einzigen Brennraum-Dichtelemente bilden.

Der Erfindung lag die Aufgabe zugrunde, das vorstehend geschilderte Zerstörungsrisiko zu beseitigen oder zumindest zu minimieren, und zwar bei gleichzeitiger Reduzierung der Unterschiede in den um die Brennraum-Öffnungen herum auf die eingebaute Zylinderkopfdichtung einwirkenden Pressungskräfte.

Diese Aufgabe lässt sich erfindungsgemäß mit einer Zylinderkopfdichtung gemäß Anspruch 1 lösen.

Sind bei einer erfindungsgemäßen Zylinderkopfdichtung die Metallblechringe mit einem Höhenprofil versehen, variiert die Höhe eines solchen Metallblechrings um die diesem zugeordnete Brennraum-Öffnung herum, und die gemäß Anspruch 1 um die Brennraum-Öffnungen herum vorgesehenen Höhenprofile sind so gestaltet, dass sie bei eingebauter Zylinderkopfdichtung dem Abfall der Schraubenkräfte mit zunehmendem Abstand von den Zylinderkopfschrauben sowie den örtlich variierenden Bauteilsteifigkeiten Rechnung tragen.

Bei der erfindungsgemäßen Zylinderkopfdichtung bilden die Metallblechringe die einzigen Brennraum-Dichtelemente, was bedeutet, dass die Zylinderkopfdichtung um die Brennraum-Öffnungen herum für deren Abdichtung keine Sicken aufweist und die Metallblechringe sowie die den Metallblechringen benachbarten, d.h. von den Letzteren überdeckten Bereiche der Metallblechlage, abgesehen von den Höhenprofilen, zumindest in der Nachbarschaft der Brennraum-Öffnungen mindestens im Wesentlichen eben sind.

Die Erfinder sind von der Überlegung ausgegangen, dass die vorstehend beschriebenen Schiebebewegungen zumindest im Wesentlichen nur zwischen der Zylinderkopfdichtung und der Dichtfläche des Zylinderkopfs stattfinden, auch wenn weit geringere Schiebebewegungen auch zwischen der Zylinderkopfdichtung und der Dichtfläche des Motorblocks stattfinden können.

Deshalb wird erfindungsgemäß vorgeschlagen, alle Blechringe auf der bei eingebauter Zylinderkopfdichtung dem Motorblock zugewandten Seite der Metallblechlage (des Trägerblechs) anzubringen.

Aus dem Prospekt "Cylinder-Head Gaskets. Quality starts in the head" der ElringKlinger AG ist eine im Wesentlichen metallische Zylinderkopfdichtung bekannt (siehe dort Seite 27), deren Dichtungsplatte eine einzige sich über die ganze Dichtungsplatte erstreckende Metallblechlage aufweist, welche im Folgenden als Trägerblech bezeichnet werden soll. Das Trägerblech hat Brennraum-Öffnungen sowie Fluid-Öffnungen für den Durchgang flüssiger Medien, wie Kühlwasser und Schmieröl. An die Ränder der Fluid-Öffnungen sind an das Trägerblech ringförmige elastomere Dichtelemente angespritzt. Um jede Brennraum-Öffnung herum ist diese bekannte Zylinderkopfdichtung mit einem Brennraum-Dichtelement in Gestalt eines auf dem Trägerblech angeordneten Metallblechrings versehen; unmittelbar an die Brennraum-Öffnung angrenzend haben das Trägerblech und der Metallblechring jeweils einen ebenen, ringförmigen Randbereich, an den sich radial nach außen ineinandergreifende Vollsicken des Trägerblechs und des Metallblechrings anschließen, wobei die zum Trägerblech weisende konvexe Seite der Metallblechring-Sicke in die konkave Seite der Trägerblech-Sicke eingreift. Wie und wo der Metallblechring mit dem Trägerblech verbunden ist, lässt der Prospekt offen; Trägerblech und Metallblechring könnten aber im Bereich der beiden Vollsicken durch Schweißen miteinander verbunden sein, wobei der Schweißvorgang an den noch ebenen Blechen durchgeführt werden könnte und erst dann die beiden aufeinanderliegenden Bleche gemeinsam durch Prägen mit den beiden Vollsicken versehen werden könnten, und zwar mittels eines Prägewerkzeugs, welches eine derart gestaltete Aussparung aufweist, dass beim Prägen der Sicken die Schweißnaht zumindest nicht nennenswert beansprucht wird. Nach der zeichnerischen Darstellung in dem genannten Prospekt scheint bei dieser bekannten Zylinderkopfdichtung der Metallblechring auf derjenigen Seite des Trägerblechs zu liegen, welche bei eingebauter Zylinderkopfdichtung dem Motorblock zugewandt ist; diese bekannte Zylinderkopfdichtung gehört jedoch zu einer anderen Dichtungsgattung als der durch die vorliegende Erfindung verbesserte Dichtungstyp, denn bei dieser bekannten Zylinderkopfdichtung wird um die Brennraum-Öffnung herum hauptsächlich durch die Vollsicken des Trägerblechs und des Metallblechrings abgedichtet, während die erfindungsgemäße Zylinderkopfdichtung im Bereich des Metallblechrings sickenlos ist und in unmittelbarer Nachbarschaft der Brennraum-Öffnung um diese herum dadurch abdichtet, dass beim Einbau der Zylinderkopfdichtung durch die Zylinderkopfschrauben der durch den Metallblechring verdickte Ringbereich der Dichtungsplatte mit besonders hohen Pressungskräften zwischen dem Motorblock und dem Zylinderkopf eingespannt wird. Außerdem kann bei der bekannten Zylinderkopfdichtung wegen der ineinandergreifenden Vollsicken der Metallblechring keine Stopperfunktion für eine gegebenenfalls im Trägerblech vorgesehene Sicke übernehmen, welche im Abstand vom Metallblechring hinter diesem liegt (von der Brennraum-Öffnung her gesehen).

Im Folgenden soll anhand der beigefügten Zeichnung ein nur schematisch dargestelltes Ausführungsbeispiel der erfindungsgemäßen Zylinderkopfdichtung erläutert werden; die Zeichnung zeigt einen Schnitt durch einen eine Brennraum-Öffnung aufweisenden Bereich der Zylinderkopfdichtung und die bei eingebauter Zylinderkopfdichtung dieser benachbarten Bereiche des Motorblocks und des Zylinderkopfs, wobei zur Verbesserung der Deutlichkeit der Darstellung die verschiedenen Bauteile im Abstand voneinander gezeichnet wurden und die Abmessungen des Trägerblechs und des Blechrings auch nicht maßstäblich wiedergegeben wurden.

Die Zeichnung zeigt einen Motorblock 10 mit einem Brennraum 12 und einer Motorblock-Dichtfläche 14, einen Zylinderkopf 16 mit einer Zylinderkopf-Dichtfläche 18 und eine Zylinderkopfdichtung 20 (alle nur teilweise). Die dargestellte Ausführungsform der Zylinderkopfdichtung hat ein ebenes Trägerblech 22 und - soweit dargestellt - einen Metallblechring 24. Über dem Brennraum 12 weist die Zylinderkopfdichtung 20 eine als Ganzes mit 26 bezeichnete Brennraum-Öffnung auf, welche von einer Öffnung 26a im Trägerblech 22 und der Öffnung 26b des Blechrings 24 gebildet wird.

Die erfindungsgemäße Zylinderkopfdichtung muss nicht rein metallisch sein und kann mit einer oder mehreren insbesondere elastomeren Beschichtungen und/oder Einlagen versehen sein, welche in der Zeichnung nicht dargestellt wurden.

Erfindungsgemäß ist der Metallblechring 24 wesentlich dünner als das Trägerblech 22 sowie auf derjenigen Seite des Trägerblechs 22 angebracht, welche bei eingebauter Zylinderkopfdichtung dem Motorblock 10 zugewandt ist. Der Blechring 24 kann, wie bereits erwähnt, durch Punktschweißen oder mittels einer kontinuierlichen Schweißnaht mit dem Trägerblech 22 verbunden sein.

Die gemäß der Zeichnung untere Seite des Blechrings 24 kann mit dem vorstehend geschilderten Höhenprofil versehen sein, welches durch Prägen hergestellt ist. Statt den Blechring 24 selbst mit einem Höhenprofil zu versehen, wird der dem Blechring 24 benachbarte Bereich des Trägerblechs 22 mit einem Höhenprofil versehen, ehe man den Blechring 24 am Trägerblech 22 befestigt, wobei dieses Höhenprofil auf der vom Blechring 24 abgewandten Seite des Trägerblechs 22 vorgesehen sein sollte.

Bei bevorzugten Ausführungsformen der Erfindung grenzt der Blechring 24 unmittelbar an die Brennraum-Öffnung 26 an, obwohl er grundsätzlich eine Öffnung 26b haben könnte, deren Durchmesser etwas größer ist als der Durchmesser des Brennraums 12. Außerdem wäre es denkbar, dass die Zylinderkopfdichtung zur Abdichtung um eine Brennraum-Öffnung herum mehrere Brennraum-Dichtelemente aufweist, obwohl dies schon aus Kostengründen nicht anzustreben ist.

Bei bevorzugten Ausführungsformen sind die Blechringe sehr dünn - ihre Dicke liegt zwischen 0,05 mm und 0,40 mm, vorzugsweise in der Größenordnung von 0,25 mm. Das Trägerblech ist hingegen wesentlich dicker und hat eine Dicke von bis zu 1,10 mm, vorzugsweise von ungefähr 0,40 mm.

## Patentansprüche

1. Zylinderkopfdichtung (20) für einen Mehrzylindermotor, welche eine einlagige Dichtungsplatte mit einer einzigen, sich mindestens im Wesentlichen über die ganze Dichtungsplatte erstreckende Metallblechlage (22), Brennraum-Öffnungen (26a, 26b) sowie für jede Brennraum-Öffnung mindestens ein ringförmiges Brennraum-Dichteiement aufweist, das die zugeordnete Brennraum-Öffnung umschließt und die Gestalt eines auf der Metallblechlage angeordneten und mit dieser durch Schweißen stoffschlüssig verbundenen Metallblechrings (24) hat,
wobei die Metallblechringe die einzigen Brennraum-Dichtelemente bilden, und die Zylinderkopfdichtung in den Bereichen der Metallblechringe sickenlos ist,
wobei zur Vergleichmäßigung der um die Brennraum-Öffnungen (26a, 26b) herum auf die eingebaute Zylinderkopfdichtung (20) einwirkenden Pressungskräfte
- der Metallblechring (24) auf seiner von der Metallblechlage (22) abgewandten Seite
oder
- der dem Metallblechring (24) benachbarte Bereich der Metallblechlage (22) auf seiner vom Metallblechring abgewandten Seite
um die zugeordnete Brennraum-Öffnung herum ein geprägtes Höhenprofil aufweist,
wobei die Metallblechringe jeweils dünner als die Metallblechlage sind, und
wobei alle Metallblechringe auf der bei eingebauter Zylinderkopfdichtung dem Motorblock (10) zugewandten Seite der Metallblechlage angebracht sind.

2. Zylinderkopfdichtung nach Anspruch 1, wobei der Metallblechring (24) unmittelbar an die diesem zugeordnete Brennraum-Öffnung (26a, 26b) angrenzt.

3. Zylinderkopfdichtung nach Anspruch 1 oder 2, wobei die Dicke der Metallblechringe (24) 0,05 mm bis 0,40 mm beträgt.

4. Zylinderkopfdichtung nach Anspruch 3, wobei die Dicke der Metallblechringe ca. 0,25 mm beträgt.

5. Zylinderkopfdichtung nach einem der Ansprüche 1 bis 4, wobei die Dicke der Metallblechlage (22) maximal 1,10 mm beträgt.

6. Zylinderkopfdichtung nach Anspruch 5, wobei die Dicke der Metallblechlage (22) ca. 0,40 mm beträgt.

## Claims

1. Cylinder head gasket (20) for a multicylinder engine, said cylinder head gasket comprising a single-layered gasket plate with a single sheet metal layer (22) extending at least substantially over the entire gasket plate, combustion chamber openings (26a, 26b), and for each combustion chamber opening at least one ring-shaped combustion chamber sealing element, which encloses the associated combustion chamber opening and is in the form of a sheet metal ring (24) which is arranged on the sheet metal layer and is joined by welding with a substance-to-substance bond to said sheet metal layer,
wherein the sheet metal rings form the single combustion chamber sealing elements, and the cylinder head gasket is beadless in the areas of the sheet metal rings,
wherein, for evening out the pressing forces acting on the cylinder head gasket (20) around the combustion chamber openings (26a, 26b),
- the sheet metal ring (24) has on its side that faces away from the sheet metal layer
or
- the area of the sheet metal layer (22) that is adjacent to the sheet metal ring (24) has on its side that faces away from the sheet metal ring
a stamped height profile around the associated combustion chamber opening,
wherein the sheet metal rings each are thinner than the sheet metal layer, and
wherein all sheet metal rings are attached to that side of the sheet metal layer which faces the engine block (10) when the cylinder head gasket is installed.

2. Cylinder head gasket in accordance with Claim 1, wherein the sheet metal ring (24) borders directly on the combustion chamber opening (26a, 26b) associated therewith.

3. Cylinder head gasket in accordance with Claim 1 or 2, wherein the thickness of the sheet metal rings (24) is 0.05 mm to 0.40 mm.

4. Cylinder head gasket in accordance with Claim 3, wherein the thickness of the sheet metal rings is about 0.25 mm.

5. Cylinder head gasket in accordance with any one of Claims 1 to 4, wherein the thickness of the sheet metal layer (22) is at most 1.10 mm.

6. Cylinder head gasket in accordance with Claim 5, wherein the thickness of the sheet metal layer (22) is about 0.40 mm.

## Revendications

1. Joint de culasse (20) pour un moteur à cylindres multiples, lequel présente une plaque d'étanchéité monocouche avec une unique couche de tôle métallique (22) s'étendant au moins sensiblement sur toute la plaque d'étanchéité, des ouvertures de chambre de combustion (26a, 26b) ainsi que, pour chaque ouverture de chambre de combustion, au moins un élément étanche de chambre de combustion de forme annulaire, qui renferme l'ouverture de chambre de combustion associée et a la configuration d'un anneau en tôle métallique (24) disposé sur la couche de tôle métallique et relié à celle-ci par liaison de matière par soudage,
dans lequel les anneaux en tôle métallique forment les uniques éléments étanches de chambre de combustion,
et le joint de culasse est sans moulure dans les zones des anneaux en tôle métallique,
dans lequel afin d'homogénéiser les forces de pression agissant sur le joint de culasse (20) installé autour des ouvertures de chambre de combustion (26a, 26b),
- l'anneau en tôle métallique (24), sur son côté se détourner de la couche de tôle métallique (22)
ou
- la zone, adjacente à l'anneau en tôle métallique (24), de la couche de tôle métallique (22) sur son côté se détourner de l'anneau en tôle métallique
présente autour de l'ouverture de chambre de combustion associée un profil en hauteur estampé,
dans lequel les anneaux en tôle métallique sont respectivement plus minces que la couche de tôle métallique, et
dans lequel tous les anneaux en tôle métallique sont installés sur le côté, tourné vers le bloc moteur lorsque le joint de culasse est monté, de la couche de tôle métallique.

2. Joint de culasse selon la revendication 1, dans lequel l'anneau en tôle métallique (24) jouxte directement l'ouverture de chambre de combustion (26a, 26b) associée à celui-ci.

3. Joint de culasse selon la revendication 1 ou 2, dans lequel l'épaisseur des anneaux en tôle métallique (24) présente une valeur de 0,05 mm à 0,40 mm.

4. Joint de culasse selon la revendication 3, dans lequel l'épaisseur des anneaux en tôle métallique présente une valeur d'environ 0,25 mm.

5. Joint de culasse selon l'une quelconque des revendications 1 à 4, dans lequel l'épaisseur de la couche de tôle métallique (22) présente au maximum une valeur de 1,10 mm.

6. Joint de culasse selon la revendication 5, dans lequel l'épaisseur de la couche de tôle métallique (22) présente une valeur d'environ 0,40 mm.
